# EUROPÄISCHE PATENTANMELDUNG

(11) **EP 3 086 191 A1**
(43) Veröffentlichungstag der Anmeldung: **26.10.2016**
(21) Anmeldenummer: 16401025.8
(22) Anmeldetag: 15.04.2016
(51) Int. Cl.: G05B 19/042

(54) **STEUERUNGSSYSTEM FÜR EINE LANDWIRTSCHAFTLICHE MASCHINE**

(30) Priorität: 20.04.2015 DE 102015105967
(71) Anmelder: Amazonen-Werke H. Dreyer GmbH & Co. KG, 49205 Hasbergen (DE)
(72) Erfinder: Konermann, Thomas, 49479 Ibbenbüren (DE)

(57) **Zusammenfassung**

Steuerungsverfahren für eine landwirtschaftliche Maschine (1) zur Steuerung von Maschinenfunktionen, wie vorzugsweise dem positionsgenauen An- und Abschalten von Verteil- und/oder Bearbeitungsprozessen, und deren Verwaltung und/oder Dokumentation, wobei mittels eines ersten Kommunikationskanals zu einem hierfür vorgesehenen Anzeige- und/oder Bediengerät (5) die Maschinenfunktionen zumindest annähernd in Echtzeit überwacht und/oder gesteuert werden Um ein Steuerungssystem für eine landwirtschaftliche Maschine zu schaffen, welche den Nachteil des Standes der Technik behebt und eine komfortablere und übersichtlichere Überwachung und Steuerung von Funktionen einer landwirtschaftlichen Maschine ermöglicht, ohne dabei die Gefahr von Fehlfunktionen in der Maschinensteuerung zu erhöhen, ist vorgesehen, dass das Steuerungsverfahren dazu ausgelegt ist, dass die Verwaltungs- und/oder Dokumentationsprozesse des Arbeitsvorganges der landwirtschaftlichen Maschine mittels eines zweiten parallelen Kommunikationskanals zu einem mobilen Endgerät (6) durchgeführt werden können.

## Beschreibung

Die vorliegende Erfindung betrifft ein Steuerungssystem für eine landwirtschaftliche Maschine mit zwei Kommunikationskanälen zur Steuerung und Überwachung der landwirtschaftlichen Maschine.

Landwirtschaftliche Zugmaschinen verfügen zum Zweck der Steuerung und Überwachung von Maschinenfunktionen inzwischen größtenteils über ein Anzeige- und/oder Bediengerät des Arbeitsgeräte- bzw. Zugmaschinenherstellers (AB) welche in der Regel in der Kabine der Zugmaschine installiert ist. Diese dient dazu Gerätefunktionen der Zugmaschine und etwaiger angehängter Arbeitsgeräte zu steuern und zu überwachen. Hierfür verfügt das AB über zumindest ein Display und verschiedene Bedienelemente, beispielsweise Tasten oder berührungsempfindliche Bereiche des Displays. Auf diese Weise können Maschinenfunktionen von der Fahrerkabine aus gesteuert werden. Beispielsweise kann hierdurch ein Verteilvorgang bei einer Verteilmaschine gestartet oder gestoppt werden. Zudem ist es möglich für die zu bearbeitenden landwirtschaftlichen Flächen im Voraus eine Bearbeitungsstrategie festzulegen und diese auf das AB zu übertragen. Die Übertragung kann drahtlos mittels WLAN, Bluetooth oder ähnlicher Verfahren oder kabelgebunden beispielsweise über einen USB-Anschluss stattfinden. Die jeweilige Bearbeitungsstrategie kann dann automatisiert, vorzugsweise mittels Unterstützung durch ein Positionserfassungssystem, abgearbeitet werden. Auch eine Dokumentation des Arbeitsprozesses kann erstellt und drahtlos oder kabelgebunden von dem AB abgerufen werden. Die Kommunikation zwischen dem AB und dem angehängten Gerät erfolgt in der Regel über eine normierte Schnittstelle, beispielsweise gemäß des Standards ISO 11783.

Nachteilig bei der bisherigen Umsetzung der Steuerung von angehängten Arbeitsmaschinen ist die Tatsache, dass jegliche Steuerung über ein AB erfolgen muss. Die Bedienung des AB und damit die Steuerung und Überwachung der jeweiligen Steuerfunktionen ist je nach Entwicklungsstand und Alter der AB, beispielsweise wegen zu kleiner Displays und unzeitgemäßem Bedienkonzept, umständlich und unübersichtlich. Zudem ist wegen ihrer sicherheitsrelevanten Funktion eine Überarbeitung des AB und ihrer Bedienoberfläche oftmals sehr aufwendig und zeitintensiv.

Die EP2798930A2 offenbart ein System zur Steuerung eines landwirtschaftlichen Gerätes mittels eines Tablet-Computers. Hierbei wird jedoch nicht zwischen sicherheitsrelevanten Maschinenfunktionen sowie Verwaltungs- und Dokumentationsaufgaben unterschieden. Handelsübliche Tablet-Computer oder mobile Telefone verfügen jedoch über Betriebssysteme, welche in der Regel nicht für die jeweilige maschinenspezifische Anwendung angepasst sind. Zudem werden üblicherweise eine Mehrzahl von Programmen parallel auf diesen Geräten gestartet, so dass die Gefahr von Programmabstürzen und Fehlfunktionen auf der Hand liegt. Bei obigem System ergibt sich somit die Gefahr von Fehlfunktionen und Unfällen, wenn es zu derartigen Problemen in den Programmabläufen kommt.

Aufgabe der vorliegenden Erfindung ist es daher, ein Steuerungssystem für eine landwirtschaftliche Maschine zu schaffen, welche den Nachteil des Standes der Technik behebt und eine komfortablere und übersichtlichere Überwachung und Steuerung von Funktionen einer landwirtschaftlichen Maschine ermöglicht, ohne dabei die Gefahr von Fehlfunktionen in der Maschinensteuerung zu erhöhen.

Dies wird erfindungsgemäß durch den kennzeichnenden Teil des Anspruchs 1 erreicht, indem ein Steuerungsverfahren bereitgestellt wird, welches dazu ausgelegt ist, die Verwaltungs- und/oder Dokumentationsprozesse des Arbeitsvorganges der landwirtschaftlichen Maschine mittels eines zweiten parallelen Kommunikationskanals zu einem mobilen Endgerät durchzuführen. Auf diese Weise können einerseits die derzeit an der landwirtschaftlichen Maschine ablaufenden Prozesse in Echtzeit durch die AB gesteuert werden, während gleichzeitig mittels eines mobilen Endgerätes Verwaltungs- und Dokumentationsprozesse auf einem mobilen Endgerät vorgenommen werden können, welche im Rahmen der Maschinensteuerung keine sicherheitsrelevante Bedeutung haben. Hierbei können Verwaltungsprozesse beispielsweise die zeitunkritische Vorgabe von Sollwerten von Einstellparametern umfassen, welche düngerbasierte Einstellungen, Einstellungen des Befüllmanagementes, Sollwert der Arbeitsbreite, das Abarbeiten von Applikationskarten und Ähnliches sein können, deren zeitkritische Einhaltung dann erforderlichenfalls mittels des Anzeige- und/oder Bediengerätes in Echtzeit gesteuert wird. Somit können die Anwendungen für die mobilen Endgeräte überwiegend nach Kriterien wie Bedienkomfort, Übersichtlichkeit und Zeitersparnis entwickelt werden. Ein Softwareabsturz auf dem mobilen Endgerät würde damit möglicherweise zu einem Datenverlust führen, die Maschinensteuerung wäre jedoch nicht beeinträchtigt, da die Auftragsabwicklung weiterhin durch das AB überwacht würde und es würde nicht zu möglichen Unfällen kommen.

In einer vorteilhaften Weiterbildung der Erfindung ist das System insbesondere derart ausgebildet, dass die Verbindung zu dem mobilen Endgerät über den zweiten Kommunikationskanal bei Softwareproblemen, insbesondere Programmabstürzen auf dem mobilen Endgerät, beendet und/oder gestartet und/oder neu gestartet werden kann, ohne dass es zu Fehlfunktionen der Steuerungsprozesse und/oder der Kommunikation mit dem Anzeige und/oder Bediengerät über den ersten Kommunikationskanal kommt. Die Software für das mobile Endgerät müsste somit nicht notwendigerweise durch den Maschinen- und/oder AB-Hersteller im Hinblick auf ihre Sicherheit entwickelt werden, da diese nicht direkt in die Maschinensteuerung eingreift. Trotzdem könnten nach einem Neustart die Verwaltungs- und/oder Dokumentationsprozesse mittels des mobilen Endgerätes fortgeführt werden.

Diese Funktionalität kann ebenso für den umgekehrten aber unwahrscheinlicheren Fall gelten, dass die Software des Anzeige- und oder Bediengerätes abstürzt. In diesem Fall kann das mobile Endgerät weiter dazu genutzt werden Verwaltungs- und/oder Dokumentationsprozesse durchzuführen.

In einer vorteilhaften Weiterbildung der Erfindung wird die Kommunikation mit dem mobilen Endgerät mittels einer auf dem Endgerät installierten und für das jeweilige Betriebssystem des Endgerätes angepassten Software bereitgestellt. Somit könnten in vorteilhafter Weise die Verwaltungs- und/oder Dokumentationsaufgaben mittels einer Software durchgeführt werden, welche exklusiv für derartige Anwendungen optimiert und angeboten wird. Beispielsweise könnten derartige Programme auf Anwendungsplattformen wie dem Appstore von Apple angeboten werden. Der Nutzer könnte dann mit seinem Mobiltelefon oder einem Tablet die Verwaltung und/oder Dokumentation der Arbeitsvorgänge der landwirtschaftlichen Maschine vornehmen.

Offenbart wird zudem im kennzeichnenden Teil des unabhängigen Anspruchs 4 ein entsprechendes Steuerungssystem für eine landwirtschaftliche Maschine, welches dazu ausgelegt ist die Verwaltungs-und/oder Dokumentationsprozesse des Arbeitsvorganges der landwirtschaftlichen Maschine mittels eines mobilen Endgerätes, wie vorzugsweise einem mobilen Telefon oder Tablet-Computer, durchzuführen.

Das Steuerungssystem kann hierbei in zwei alternativen Ausgestaltungen derart realisiert sein, dass die Kommunikation zwischen Endgerät und Jobrechner unmittelbar über eine Schnittstelle zwischen diesen beiden Geräten stattfindet oder dass die Kommunikation durch eine Schnittstelle des AB übermittelt wird. Die Schnittstellen können hierbei insbesondere als drahtgebundene Kabelverbindungen oder drahtlose Funkverbindungen beispielsweise mittels WLAN, Bluetooth, Infrarot oder ähnlichem realisiert sein.

Weitere Einzelheiten der Erfindung sind der Beispielsbeschreibung und den Zeichnungen zu entnehmen. Hierbei zeigen
Fig. 1 Aufbau des erfindungsgemäßen Kommunikationssystems und
Fig. 2 die schematische Anordnung der verschiedenen Komponenten des Steuersystems an einer Kombination aus einem landwirtschaftlichen Zugfahrzeug und einem angehängten Arbeitsgerät.

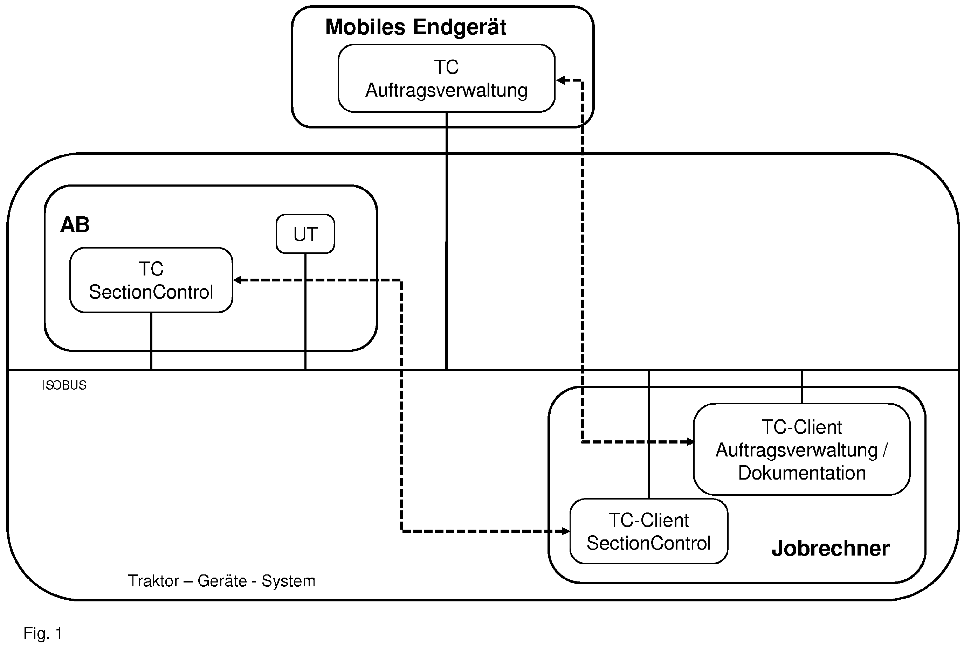

Figur 1 zeigt das erfindungsgemäße Kommunikationssystem eingebettet in die Traktorsteuerung gemäß der Norm ISO 11783. Ein Arbeitsgerät ist hierbei verbunden mit einer landwirtschaftlichen Zugmaschine. Diese bilden zusammen das sogenannte Traktor-Arbeitsgeräte-System. Die Steuerung des Arbeitsgerätes und der entsprechenden Maschinenfunktionen wird mittels eines Jobrechners abgewickelt, welcher über das ISOBUS-Schnittstellensystem kabelgebunden mit dem AB des Traktors verbunden ist. Die ISOBUS-Schnittstelle wird in der ISO-Norm 11783 definiert. Es sind auch andere Kommunikationsarten denkbar, beispielsweise drahtlos mittels Bluetooth, Infrarot oder WLAN. Die Datenverarbeitung wird auf dem Traktor von dem AB durchgeführt. Diese verfügt in der Regel über eine Anzeigevorrichtung sowie Bedienelemente und ist üblicherweise zudem mit Schnittstellen, beispielsweise USB, ausgestattet, welche es ermöglicht weitere Geräte an die AB anzuschließen. In dem vorliegenden Ausführungsbeispiel sind zwei Funktionalitäten des AB dargestellt. Dies ist erstens der TC SectionControl, der zur Echtzeitsteuerung des Ausbringvorganges bzw. der Einstellung der Arbeitsbreite entsprechend der mittels eines GPS-Empfängers ermittelten örtlichen Gegebenheiten dient. Zweitens erfüllt das AB auch die Funktion eines Universal Terminals (UT), welches die universelle Steuerung von Maschinenfunktionen mittels der Anzeige- und Bedienvorrichtung des Gerätes erlaubt.

Ein mobiles Endgerät, welches typischerweise in einer hierfür vorgesehenen Haltevorrichtung auf dem Traktor in der Nähe des AB angebracht ist, ist ebenfalls mit dem ISOBUS-Schnittstellensystem verbunden, beispielsweise über eine Kabelverbindung mit dem AB. Es kann aber auch beispielsweise eine Verbindung mittels der oben genannten drahtlosen Kommunikationstechniken hergestellt werden.

Die Steuerung der Maschinenfunktionen wird hier beispielhaft als SectionControl dargestellt. Diese Funktionalität dient typischerweise zur positionsgenauen An- und Abschaltung von Verteilprozessen mittels eines GPS-Signals. Es können jedoch auch andere Maschinensteuerungsprozesse als SectionControl mittels des erfindungsgemäßen Steuerungssystems gesteuert werden. Die Überwachung und Steuerung dieser SectionControl-Funktionalität wird nun mittels eines Softwaremoduls, dem sogenannten ersten TaskController-Client, auf dem Jobrechner des Arbeitsgerätes, eines Softwaremoduls auf der AB, dem sogenannten TaskController, sowie der Verbindung über die ISOBUS-Schnittstelle, welche die Kommunikation der beiden Geräte bereitstellt, ermöglicht. Die verschiedenen Kommunikationswege sind hier mittels der gestrichelten Pfeile dargestellt.

Der TaskController auf dem AB ist nun in der Lage, beispielsweise an Hand vorliegender Bearbeitungskarten sowie eines Positionssignals eines vorhanden GPS-Empfängers, einen Verteilvorgang des Arbeitsgerätes positionsgenau zu starten oder zu stoppen. Zu diesem Zweck wird mittels der ISOBUS-Schnittstelle ein entsprechendes Signal von dem TaskController des AB an den ersten TaskController-Client des Jobrechners gesendet, so dass der entsprechende Befehl, beispielsweise "Verteilvorgang starten" oder "Verteilvorgang stoppen" von dem Arbeitsgerät ausgeführt wird.

Zudem ist ein mobiles Endgerät, beispielsweise ein mobiles Telefon oder ein Tablet-Computer an das ISOBUS-System angeschlossen. Dies kann mittels einer drahtlosen Verbindung zu dem Jobrechner oder zu dem AB oder mittels einer kabelgebundenen Verbindung, vorzugsweise zu dem AB, realisiert sein. Ein Softwaremodul, ein zweiter TaskController, auf dem mobilen Endgerät baut nun einen zweiten Kommunikationskanal zu dem Jobrechner des Arbeitsgerätes auf. Dieses zweite Softwaremodul ist für die Auftragsverwaltung der Arbeitsaufträge des Arbeitsgerätes zuständig, es können über diese Schnittstelle jedoch auch weitere Funktionen, wie beispielsweise Dokumentationsaufgaben abgearbeitet werden. Die Kommunikation zwischen dem TaskController, welcher auf dem mobilen Endgerät aktiviert ist und dem Jobrechner wird in dem Ausführungsbeispiel ebenfalls über die ISOBUS-Schnittstelle abgewickelt. Hierfür wird auf dem Jobrechner ein zweiter TaskController-Client gestartet, welcher ausschließlich die Auftragsverwaltung und Dokumentation bzw. die hierfür notwendige Kommunikation mit dem mobilen Endgerät übernimmt.

Eine Änderung der Arbeitsaufträge für die Maschine kann nun in vorteilhafter Weise auf dem mobilen Endgerät mittels einer hierfür optimierten Software vorgenommen werden. Beispielsweise kann die Vorgabe der oben erwähnten Bearbeitungskarten mittels des mobilen Endgerätes durchgeführt werden. Die Überwachung der korrekten Abarbeitung wird dann in Echtzeit durch das AB überwacht. Wurde die Änderung abgeschlossen, wird diese vorzugsweise an den Jobrechner über den zweiten Kommunikationskanal zwischen TaskController auf dem mobilen Endgerät und dem zweiten TaskController-Client auf dem Jobrechner übermittelt. Erst nach der vollständigen Übertragung des neuen Arbeitsauftrages, wird der alte Arbeitsauftrag angepasst oder ersetzt. Bei Problemen während der Übertragung des Arbeitsauftrages kommt es nun in vorteilhafter Weise nicht zu Beeinträchtigungen der Maschinensteuerung, da der alte Arbeitsauftrag erst nach vollständiger Übertragung des neuen Arbeitsauftrages ersetzt wird. Somit kann verhindert werden, dass Programmabstürze auf dem mobilen Endgerät zu einer Beeinträchtigung der Arbeitsgerätefunktionen und Arbeitsgerätesicherheit führen.

Selbst wenn ein Programmabsturz auf dem mobilen Endgerätes auch zu einem Programmabsturz des hiermit verbundenen zweiten TaskController-Clients führen würde, so wären doch die Maschinenfunktionen nicht beeinträchtigt, da die Funktionsweise des ersten TaskController-Clients hiervon unberührt bliebe.

Die Maschinenfunktionen, beispielsweise SectionControl, des Arbeitsgerätes werden also exklusiv durch den ersten TaskController-Client auf dem Jobrechner, den TaskController auf dem AB und die Kommunikation zwischen ihnen gesteuert, während die Auftragsverwaltung und Dokumentation durch den zweiten TaskController-Client auf dem Jobrechner, den TaskController auf dem mobilen Endgerät, sowie deren Kommunikation abgewickelt werden.

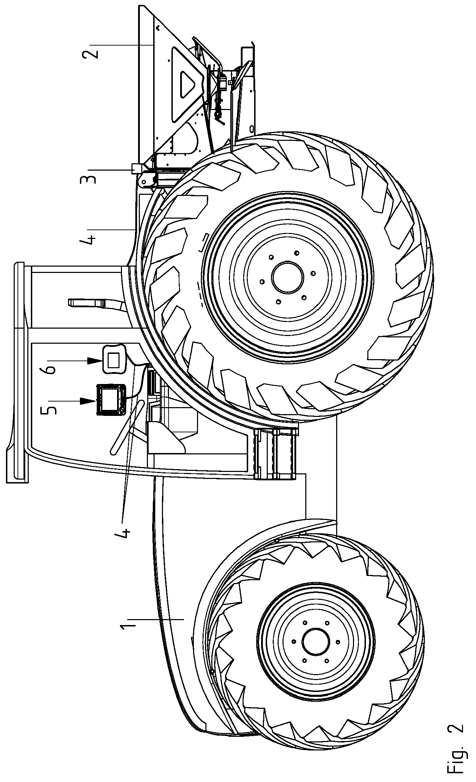

Figur 2 zeigt die beispielhafte Anordnung des erfindungsgemäßen Steuersystems auf einer Kombination aus einem landwirtschaftlichen Zugfahrzeug 1 und einem angebauten Gerät, welches in diesem Fall als Zentrifugaldüngerstreuer 2 ausgebildet ist, welche mittels einer Dreipunktkupplung an das Zugfahrzeug angebaut ist. Das erfindungsgemäße Steuerungssystem kann ebenso mit angehängten Geräten verwendet werden. Auch ist denkbar das Steuerungssystem mit Maschinen zu verwenden, welche nicht physikalisch verbunden sind und lediglich über Funk kommunizieren.

Auf dem angehängten Gerät befindet sich der Jobrechner 3, welcher die Steuerung von Maschinenfunktionen, beispielsweise das ortsgenaue An- und Abschalten des Verteilprozesses oder das Anpassen der Verteilmenge an die örtlichen Gegebenheiten, übernimmt.

Zu diesem Zweck verfügt der Jobrechner in diesem Ausführungsbeispiel über eine kabelgebundene Verbindung 4 zu einem AB 5, welche sich in der Fahrerkabine der Zugmaschine befindet. Dieser erste Kommunikationskanal kann beispielsweise nach dem Standard ISO 11783 ausgestaltet sein. Es kann sich aber beispielsweise auch um eine drahtlose Verbindung handeln. Das AB dient zur Anzeige von Statusdaten des Arbeitsgerätes 2 sowie der Steuerung desselben.

Desweiteren befindet sich in der Fahrerkabine ein mobiles Endgerät 6 welches zur Auftragsverwaltung und Dokumentation des Arbeitsprozesses dient. Mittels einer hierfür vorgesehenen und auf dem mobilen Endgerät installierten Software kann eine Anpassung der Arbeitsaufträge des Arbeitsgerätes vorgenommen und die Dokumentation des Arbeitsprozesses erledigt werden. Hierfür werden die aktuellen Arbeitsaufträge mittels eines zweiten Kommunikationskanals zwischen dem Jobrechner 3 und dem mobilen Endgerät 6 übertragen und zur weiteren Verarbeitung auch Statusdaten der Maschine auf dem mobilen Endgerät 6 gespeichert. Der zweite Kommunikationskanal zwischen dem Jobrechner 3 und dem mobilen Endgerät 6 kann als direkte kabelgebundene oder drahtlose Verbindung zwischen dem Jobrechner 3 und dem mobilen Endgerät 6 ausgestaltet sein. Alternativ kann das mobile Endgerät 6 auch mittels eines Kabels, wie in dem Ausführungsbeispiel, oder aber drahtlos über das AB mit dem Jobrechner verbunden sein.

Besonders vorteilhaft können mittels der vorliegenden Erfindung auf einer hierfür optimierten Benutzeroberfläche des mobilen Endgerätes Arbeitsaufträge verwaltet, geändert, optimiert und neu erstellt werden und dann unmittelbar an den Jobrechner übertragen werden, ohne dass die Gefahr von Arbeitsgerätefehlfunktionen besteht, da die unmittelbare Steuerung der Maschinenfunktionen weiterhin über die AB abgewickelt wird und die Arbeitsaufträge erst nach vollständiger Übermittlung aktiviert werden.

Überdies ist es von besonderem Vorteil, dass mittels des mobilen Endgerätes während des Arbeitsprozesses Maschinendaten zur Dokumentation auf dem mobilen Endgerät gespeichert werden können. Ergänzend können weitere Daten, wie beispielsweise Wetterdaten, die Temperatur, Uhrzeit, gespeichert werden. Nach Beendigung des Arbeitsprozesses kann das mobile Endgerät aus der Fahrerkabine entfernt werden, um beispielsweise an einem Büroarbeitsplatz weitere Dokumentationstätigkeiten durchzuführen.

## Patentansprüche

1. Steuerungsverfahren für eine landwirtschaftliche Maschine zur Steuerung von Maschinenfunktionen, wie vorzugsweise dem positionsgenauen An- und Abschalten von Verteil- und/oder Bearbeitungsprozessen, und deren Verwaltung und/oder Dokumentation, wobei mittels eines ersten Kommunikationskanals zu einem hierfür vorgesehenen Anzeige- und/oder Bediengerät die Maschinenfunktionen zumindest annähernd in Echtzeit überwacht und/oder gesteuert werden, **dadurch gekennzeichnet, dass** das Steuerungsverfahren dazu ausgelegt ist, dass die Verwaltungs- und/oder Dokumentationsprozesse des Arbeitsvorganges der landwirtschaftlichen Maschine mittels eines zweiten parallelen Kommunikationskanals zu einem mobilen Endgerät durchgeführt werden können.

2. Steuerungsverfahren nach Anspruch 1, **dadurch gekennzeichnet, dass** die Verbindung zu dem mobilen Endgerät über den zweiten Kommunikationskanal bei Softwareproblemen, insbesondere Programmabstürzen auf dem mobilen Endgerät, beendet und/oder gestartet und/oder neu gestartet werden kann, ohne dass es zu Fehlfunktionen der Steuerungsprozesse und/oder der Kommunikation mit dem Anzeige und/oder Bediengerät über den ersten Kommunikationskanal kommt.

3. Steuerungsverfahren nach Anspruch 1, **dadurch gekennzeichnet, dass** die Verbindung zu dem Anzeige- und/oder Bediengerät über den ersten Kommunikationskanal bei Softwareproblemen, insbesondere Programmabstürzen auf dem Anzeige- und oder Bediengerät, beendet und/oder gestartet und/oder neu gestartet werden kann, ohne dass es zu Fehlfunktionen der Verwaltungs- und/oder Dokumentationsprozesse und/oder der Kommunikation mit dem mobilen Endgerät über den zweiten Kommunikationskanal kommt.

4. Steuerungsverfahren nach zumindest einem der Ansprüche 1 bis 3, **dadurch gekennzeichnet, dass** die Kommunikation mit dem mobilen Endgerät mittels einer auf dem Endgerät installierten und für das jeweilige Betriebssystem des Endgerätes angepassten Software bereitgestellt wird.

5. Steuerungssystem für eine landwirtschaftliche Maschine zur Steuerung von Maschinenfunktionen, wie vorzugsweise dem positionsgenauen An- und Abschalten von Verteil- und/oder Bearbeitungsprozessen, mit zumindest einem Positionsbestimmungsmodul, einer Schnittstelle zur Kommunikation mit einem mobilen Endgerät, vorzugsweise einem Tablet-Computer oder mobilen Telefon, und einer separaten Schnittstelle zur Kommunikation mit einem Anzeige- und/oder Bediengerät, wobei die Maschinenfunktionen zumindest annähernd in Echtzeit mittels des hierfür vorgesehenen Anzeige-und/oder Bediengerätes überwacht und/oder gesteuert werden,
**dadurch gekennzeichnet dass**
das Steuerungssystem dazu ausgelegt ist, dass die Verwaltungs- und/oder Dokumentationsprozesse des Arbeitsvorganges der landwirtschaftlichen Maschine mittels eines mobilen Endgerätes, wie vorzugsweise einem mobilen Telefon oder Tablet-Computer, durchgeführt werden können.

6. Steuerungssystem nach Anspruch 5, **dadurch gekennzeichnet, dass** die Kommunikation mit dem mobilen Endgerät mittels einer drahtlosen Verbindung, vorzugsweise mittels Bluetooth, Infrarot oder WLAN, hergestellt wird.

7. Steuerungssystem nach Anspruch 5 oder 6, **dadurch gekennzeichnet, dass** die Verbindung zu dem mobilen Endgerät bei Softwareproblemen, insbesondere Programmabstürzen auf dem mobilen Endgerät, beendet und/oder gestartet und/oder neu gestartet werden kann, ohne dass es zu Fehlfunktionen der Steuerungsprozesse und/oder der Kommunikation mit dem Anzeige und/oder Bediengerät kommt.

8. Steuerungsverfahren nach zumindest einem der Ansprüche 5 bis 7, **dadurch gekennzeichnet, dass** die Kommunikation mit dem mobilen Endgerät mittels einer auf dem Endgerät installierten und für das jeweilige Betriebssystem des Endgerätes angepassten Software bereitgestellt wird.
